# EUROPÄISCHE PATENTANMELDUNG

(11) **EP 4 606 960 A1**
(43) Veröffentlichungstag der Anmeldung: **27.08.2025**
(21) Anmeldenummer: 25158237.5
(22) Anmeldetag: 17.02.2025
(51) Int. Cl.: E03B 1/04, A01G 25/16, E03B 3/02, E03B 3/03, E03F 5/14, E03F 5/22

(54) **SYSTEM ZUR SPEICHERUNG VON ANFALLENDEM NIEDERSCHLAGSWASSER ZUR SPÄTEREN WIEDERVERWENDUNGSYSTEM**

(30) Priorität: 22.02.2024 DE 102024105012
(71) Anmelder: AquaUrban GbR, 33378 Rheda-Wiedenbrück (DE)
(72) Erfinder: Rüsing, Johannes, 33165 Lichtenau (DE); Löhner, Hajo, 59329 Wadersloh (DE); Theilmeier, André, 33415 Verl (DE); Theilmeier, Thomas, 33378 Rheda-Wiedenbrück (DE)
(74) Vertreter: Ellberg, Nils

(57) **Zusammenfassung**

Die Erfindung betrifft ein System zur Speicherung von insbesondere auf einer Erdreichabdeckung (10) anfallendem Niederschlagswasser (12) in einem Retentionsraum (11) zur späteren Wiederverwendung, wobei ein Bereich des Oberbaus der Erdreichabdeckung (10) dazu eingerichtet ist, eine wasserführende Ebene unterhalb einer Deckschicht (13) der Erdreichabdeckung (10) zu schaffen, um das anfallende Niederschlagswasser (12) dem Retentionsraum (11) zuzuleiten, und wobei das System dazu eingerichtet ist, das im Retentionsraum (11) gespeicherte Wasser bei Bedarf der wasserführenden Ebene zuzuführen, um es dort zu verdunsten.

## Beschreibung

In der aktuellen Ära des Klimawandels sind signifikante Veränderungen in den klimatischen Bedingungen nicht mehr zu übersehen. Diese Veränderungen manifestieren sich in Form von längeren Trockenperioden sowie intensiveren und länger andauernden Regenereignissen. Diese neuen klimatischen Muster stellen eine Herausforderung für die kommunale Infrastrukturplanung dar, die traditionell auf Systeme zur schnellen Ableitung von Niederschlagswasser aus städtischen Gebieten setzt.

Bisherige Lösungsansätze, wie Drainagesysteme und Kanäle, die Niederschlagswasser zu Flüssen oder Retentionsräumen leiten, zielen darauf ab, Wasser schnell aus städtischen Gebieten zu entfernen. Obwohl solche Systeme effektiv in der Verhinderung von Überschwemmungen sind, weisen sie einen signifikanten Nachteil auf: Die wertvollen Niederschlagswassermengen gehen für weitere Nutzungen verloren. Dies betrifft sowohl die Wiederauffüllung lokaler Grundwasservorkommen als auch die potenzielle Nutzung des Wassers für städtische Kühlung (Urban Cooling) und die Bewässerung städtischer Vegetation.

Urban Cooling, ein Konzept zur Senkung der städtischen Temperaturen durch Nutzung von Niederschlagswasser, gewinnt in Zeiten des Klimawandels an Bedeutung. Durch die Verdunstung von Wasser in städtischen Grünflächen und auf anderen Oberflächen wird die urbane Hitze reduziert, was zur Verbesserung des Mikroklimas in städtischen Gebieten beiträgt. Die Nutzung von Regenwasser für Urban Cooling und die Bewässerung von Pflanzen in städtischen Gebieten bieten daher eine doppelte Vorteilhaftigkeit: Einerseits wird das städtische Mikroklima verbessert, andererseits werden natürliche Wasserressourcen effizient genutzt.

In diesem Kontext bedarf es innovativer Ansätze, die nicht nur den Herausforderungen des Klimawandels gerecht werden, sondern auch die Potenziale des Niederschlagswassers in urbanen Gebieten voll ausschöpfen. Die vorliegende Erfindung befasst sich mit der Entwicklung eines solchen Systems und weist die Merkmale des Anspruchs 1 auf. Es ist demnach vorgesehen, dass ein Bereich des Oberbaus der Erdreichabdeckung dazu eingerichtet ist, eine wasserführende Ebene unterhalb einer Deckschicht der Erdreichabdeckung zu schaffen, um das anfallende Niederschlagswasser dem Retentionsraum zuzuleiten, und wobei das System dazu eingerichtet ist, das im Retentionsraum gespeicherte Wasser bei Bedarf der wasserführenden Ebene zuzuführen, um es dort zu verdunsten

Auf diese Weise kann das unterhalb der Erdreichabdeckung verdunstende Niederschlagswasser bzw. die so entstehende Feuchtigkeit aufsteigen und zu einer Temperaturreduzierung und/oder Erhöhung der Luftfeuchtigkeit führen. Das Niederschlagswasser wird somit nicht ungenutzt abgeführt, sondern kann für die städtische Kühlung benutzt werden.

Gemäß einer bevorzugten Weiterentwicklung können nicht nur auf der Erdreichabdeckung anfallende Niederschläge dem Retentionsraum zugeführt werden, sondern auch Mengen aus der Dachentwässerung oder von anderen Flächen. Ebenso kann der Retentionsraum bei Bedarf mit Grundwasser gefüllt werden, wenn die Niederschläge nicht ausreichen, um die zur gewünschten Kühlung benötigten Wassermengen zur Verfügung zu stellen.

Damit das anfallende Niederschlagswasser nicht auf der Erdreichabdeckung abgeführt wird, ist die Erdreichabdeckung dazu eingerichtet, das anfallende Niederschlagswasser vorzugsweise vollständig in Richtung eines Unterbaus der Erdreichabdeckung zu versickern. Hierzu kann die Erdreichabdeckung eine sickerfähige Deckschicht aufweisen, insbesondere aus (Beton-)Pflastersteinen, Klinker, Natursteinen oder Drain-Asphalt.

Vorzugsweise ist vorgesehen, dass der Bereich des Oberbaus durch eine Speicherschicht gebildet ist, die oberhalb einer im Wesentlichen flüssigkeitsdichten, insbesondere wasserdichten, Sperrschicht als wasserführende Ebene angeordnet ist, wobei vorzugsweise vorgesehen ist, dass zwischen Speicherschicht und Deckschicht eine Bettungsschicht angeordnet ist.

Vorzugsweise ist vorgesehen, dass der Bereich des Oberbaus dazu eingerichtet ist, ein oder mehrere Drainagesysteme aufzunehmen, um insbesondere bei größeren Niederschlagsmengen die Ableitung zum Retentionsraum sicherzustellen.

Beispielsweise können Drainagerohre hierzu zum Einsatz kommen, die im Bereich des Oberbaus verlegt sind, um das einsickernde Niederschlagswasser zu sammeln und dem Retentionsraum zuzuführen.

Vorzugsweise sind das oder die Drainagesysteme dazu eingerichtet, das Niederschlagswasser mittels Schwerkraft dem Retentionsraum zuzuführen. Alternativ oder zusätzlich kann aber vorgesehen sein, dass dem Retentionsraum eine oder mehrere Pumpen zugeordnet sind, um das anfallende Niederschlagswasser aus dem oder den Drainagesystemen abzusaugen. Auf diese Weise ist es möglich, die Ableitung des Niederschlagswassers aus dem oder den Drainagesystem (en) zum Beispiel bei Starkregenereignissen zu unterstützen. Ferner können eine oder mehrere Pumpen auch dazu dienen, das Niederschlagswasser in den Bereich des Oberbaus zu pumpen. Dies kann über das Drainagesystem bzw. die Drainageleitungen erfolgen oder über eine oder mehrere separate Rohre bzw. Leitungen.

Weiterhin kann vorgesehen sein, dass die Erdreichabdeckung, insbesondere die Deckschicht dazu eingerichtet ist, Schadstoffe, insbesondere Schwermetalle, Öle und dergleichen, aus dem Niederschlagswasser zu entfernen und zurückzuhalten. Hierzu zählen auch sog. abfiltrierbare feste Stoffe (AFS) kleiner 0,063 mm, z. B. Mikroplastik.

Weiterhin kann vorgesehen sein, dass dem Retentionsraum eine Absetzkammer, in der sich Grobstoffe absetzen können, für das zugeführte Niederschlagswasser zugeordnet ist. Die Absetzkammer kann als revisionierbares Klärelement wirken, ähnlich einer Mehrkammer-Klärgrube. Auf diese Weise wird der Gefahr begegnet, dass ungeklärtes Wasser beim Zurückpumpen in den Bereich des Oberbaus das oder die Drainagesysteme verstopft.

Insbesondere kann vorgesehen sein, dass dem Retentionsraum ein steuerbares Überlaufsystem zugeordnet ist, welches dazu eingerichtet ist, sowohl die passive als auch die aktive Ableitung des Niederschlagswassers direkt in den Grundwasserkörper zu ermöglichen. Auf diese Weise kann sichergestellt werden, dass der Retentionsraum bei Starkregenereignissen nicht überläuft.

Eine weitere Besonderheit kann darin bestehen, dass der Retentionsraum dazu eingerichtet ist, Wasser aus dem Grundwasserkörper zu entnehmen. Auf diese Weise kann bei ausbleibenden Niederschlägen Grundwasser benutzt werden, um dieses in den Bereich des Oberbaus zu leiten.

Vorzugsweise ist eine Steuerung vorgesehen, um (Niederschlags-)Wasser nach Maßgabe des jeweiligen Bedarfs in den Bereich des Oberbaus der Erdreichabdeckung zurückzuführen. Die Steuerung kommuniziert dabei vorzugsweise mit Sensoren im Bereich der Erdreichabdeckung bzw. im Bereich des Oberbaus, um den Bedarf der Kühlung und/oder der Zuführung von Niederschlagswasser zu ermitteln und entsprechend zuzuführen.

Alternativ oder zusätzlich zur Zuführung von (Niederschlags-)Wasser aus dem Retentionsraum in den Bereich des Oberbaus der Erdreichabdeckung kann auch vorgesehen sein, dass dieses oberseitig der Erdreichabdeckung zugeführt wird, insbesondere mittels Flächenbewässerung. Diese Zuführung kann beispielsweise über Schwallsysteme, Beregnungssysteme oder mittels einer Wasserspielanlage oder ähnlicher wasserführender Einrichtungen erfolgen.

Alternativ oder zusätzlich zu den vorstehenden Maßnahmen kann das (Niederschlags-) Wasser aus dem Retentionsraum auch der Vegetation zugeführt werden. Dabei kann der Bewässerungsbedarf der Vegetation durch ein vernetztes Funksystem mittels der Steuerung ermittelt und bedarfsweise gesteuert werden.

Weiterhin kann alternativ oder zusätzlich zu den vorstehenden Maßnahmen auch vorgesehen sein, dass Wasser aus dem Retentionsraum auch Fassaden von Gebäuden zugeführt werden kann. Bei den Fassaden kann es sich sowohl um begrünte als auch unbegrünte Fassaden handeln.

Vorzugsweise kann vorgesehen sein, dass die Energieversorgung des Systems bzw. deren Komponenten durch den Einsatz erneuerbarer Energien wie insbesondere Photovoltaik-Anlagen mit oder ohne Speichermodul erfolgt.

Alternativ zur Versickerung des im Bereich der Erdreichabdeckung anfallenden Niederschlagswassers kann auch vorgesehen sein, dass dieses durch an die Erdreichabdeckung angrenzende Entwässerungselemente dem Retentionsraum zuführbar ist. Auf diese Weise kann beispielsweise auch bei Starkregenereignissen sichergestellt werden, dass das Wasser kontrolliert in den Retentionsraum gelangt.

Eine Besonderheit kann auch darin bestehen, dass ein oder mehrere Retentionsräume des Systems oder unterschiedlicher Systeme miteinander vernetzt sind.

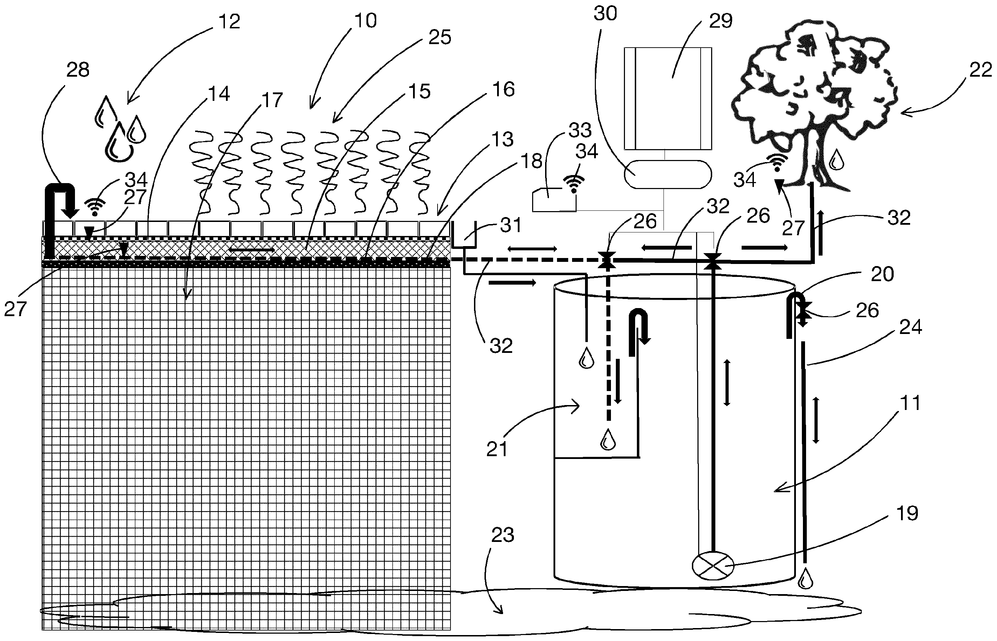

Ein bevorzugtes Ausführungsbeispiel der Erfindung wird nachfolgend anhand der Zeichnung beschrieben, in der die einzige Fig. 1 exemplarisch den Aufbau eines Systems zur Speicherung von auf einer Erdreichabdeckung anfallendem Niederschlagswasser in einem Retentionsraum zur späteren Wiederverwendung zeigt.

Das in der Fig. 1 gezeigte System zeigt einen benachbart zu einer Erdreichabdeckung 10 angeordneten Retentionsraum 11 zur Aufnahme von Niederschlagswasser 12. Bei dem Niederschlagswasser 12 kann es sich um auf der Erdreichabdeckung 10 anfallendes Niederschlagswasser 12 handeln oder um Niederschlagswasser aus einer Dachentwässerung oder anderen Quellen.

Die Erdreichabdeckung 10 besteht aus einer oberseitigen Deckschicht 13, die es ermöglicht, dass das Niederschlagswasser 12 in den Bereich des Oberbaus unterhalb der Deckschicht 13 versickert. Gezeigt ist eine Deckschicht 13 aus (Beton-)Pflastersteinen. Denkbar sind aber auch Natursteine, Klinker, Drain-Asphalt und alle anderen geeigneten Deckschichten 13.

Idealerweise wird ein Flächenbelag in Ansatz gebracht, der die Fähigkeit hat, Niederschlagsmengen von Verkehrsflächen nicht nur vollständig zu versickern, sondern gleichzeitig auch in der Lage ist, eventuelle Schadstoffe wie Schwermetalle, Öle etc. aus dem Niederschlagswasser zu entfernen und zurückzuhalten. Gleichzeitig bedeutet diese Art des Flächenbelages nahezu keinerlei Einschränkungen in seiner Nutzbarkeit, sodass hier keinerlei Kompromisse in Bezug auf die planerische und gestalterische Auslegung des Verkehrsraums gemacht werden müssen.

Unterhalb der Deckschicht 13 befindet sich eine Bettungsschicht 14. Unter der Bettungsschicht 14 ist eine Speicherschicht 15 angeordnet, unter der sich eine im Wesentlichen flüssigkeitsdichte, insbesondere wasserdichte Sperrschicht 16 befindet, um in diesem Bereich des Oberbaus unterhalb der Deckschicht 13 eine wasserführende Ebene zu bilden. Unterhalb der Sperrschicht 16 befindet sich eine Tragschicht 17.

Beispielsweise kann für die Bettungsschicht 14 ein für die Verlegung von Pflaster und Platten geeignetes mineralisches Bettungsmaterial mit einer Sieblinie 0-5 mm, vorzugsweise 0-8 mm, verwendet werden. Die Einbauhöhe kann beispielsweise 3 bis 5 cm betragen. Für die Speicherschicht 15 kann beispielsweise geeignetes mineralisches Material mit einer Höhe von 3 bis 5 cm eingebracht werden. Als bevorzugte Sieblinie kommt mineralisches Material der Sieblinie 2-5 mm zum Einsatz. Für die (im Wesentlichen) wasserundurchlässige Sperrschicht 16 kann beispielsweise ein Bitumen-Sand-Gemisch zum Einsatz kommen. Für die Tragschicht 17 kann beispielsweise mineralisches Material mit einer Sieblinie 0-45 mm benutzt werden.

In den Bereich des Oberbaus sind ferner ein oder mehrere Drainagesysteme 18 integriert, um das durch die Deckschicht 13 hindurchgesickerte Niederschlagswasser 12 aufzunehmen und in Richtung des Retentionsraums 11 zu leiten. Denkbar ist beispielsweise der Einsatz von Drainagerohren oder -leitungen.

Bei geringen Niederschlagsmengen kann der Bereich des Oberbaus oberhalb der Sperrschicht 16 das anfallende Niederschlagswasser 12 aufnehmen. Bei größeren Niederschlagsmengen erfolgt eine Ableitung zum Retentionsraum 11 mittels des oder der Drainagesysteme 18. Zusätzlich könnten bei schwierigen Gefällesituationen oder bei extremen Wassermengen eine oder mehrere Pumpen 19 im Retentionsraum 11, anstatt zu pumpen, die Wassermassen aus der Drainage ansaugen und so die Entwässerungsleistung erhöhen.

Das durch dieses Konstrukt aufgefangene Niederschlagswasser 12 wird sodann einem bedarfsweise frei dimensionierbaren und frei skalierbaren Retentionsraum 11 mit entsprechender Überlaufableitung 20 und Absetzkammer 21 zugeführt. Die Dimensionierung richtet sich nach dem zukünftigen Rückführungsbedarf solcher Niederschlagsmengen zur Kühlung des urbanen Raumes oder zur Bewässerung von Vegetation 22. Der frei definierbare Retentionsraum 11 ist mit einem steuerbaren Überlaufsystem ausgerüstet, welches die passive als auch aktive Ableitung des Niederschlagswassers 12 direkt in den Grundwasserkörper 23 erlaubt. Gleichzeitig wird über die entsprechende Leitung 24 auch die Möglichkeit eröffnet, bei sehr lang anhaltender Trockenheit Wasser aus dem Grundwasserkörper 23 zu entnehmen, um es über den Retentionsraum 11 zur Nutzung bereitzustellen.

Die Rückführung des Niederschlagswassers 12 aus dem Retentionsraum 11 zur Kühlung kann auf zweierlei Weise erfolgen. Zum einen durch das Einleiten des Niederschlagswassers 12 in den Bereich des Oberbaus unterhalb der Deckschicht 13, beispielsweise in die Bettungsschicht 14 der Erdreichabdeckung 10 bzw. zur Unterseite der Erdreichabdeckung 10, sodass dort durch Verdunstung aufsteigende Feuchtigkeit 25 zur Temperaturreduzierung genutzt werden kann. Die Rückführung kann entweder über eines oder mehrere der Drainagesysteme 18 erfolgen oder über separate Rohre oder Leitungen.

Darüber hinaus ist eine Direktzuführung 28 dieser Niederschlagsmengen an die Oberfläche des Verkehrsraumes mittels spezifischer Flächenbewässerung denkbar. Vorstellbar ist hier die Zuführung über Schwallsysteme, Beregnungssysteme oder zum Beispiel auch mittels einer Wasserspielanlage im jeweiligen Verkehrsraum.

Schließlich kann das Niederschlagswasser 12 bei Bedarf auch an die Vegetation 22 abgegeben werden oder auch an begrünte oder unbegrünte Fassaden von Gebäuden.

Die entsprechenden Leitungswege werden je nach Einsatzbedarf mittels der Steuerung 33 über Mehrwegeventile 26 (2 oder mehr Wege) geöffnet und geschlossen.

Der Rückführungsumfang des Niederschlagswassers 12 wird mittels einer (intelligenten) Steuerung 33 aus den Parametern Bewässerungsbedarf für Vegetation 22 sowie Kühlungsbedarf des urbanen Raumes berechnet. Hierzu werden verschiedene (Feuchtigkeits-)Sensoren 27 zum Einsatz gebracht, mit Hilfe derer die Steuerung 33 in der Lage ist, einzelne Bedarfsmengen zielgerichtet über das Leitungsnetz 32 oder separate Leitungen an die Oberfläche zurückzuführen. Die Vernetzung der zu steuernden Komponenten des Systems kann durch ein Funksystem 34 erfolgen. Mit Hilfe des Funksystems 34 können alle Elemente des Systems miteinander bzw. mit der Steuerung 33 kommunizieren, sodass Wasserstände bzw. Feuchtigkeitsgehalte an allen denkbaren Bereichen detektiert oder gemessen werden können, um nach Maßgabe der Messwerte Aktionen einzuleiten. Alternativ ist es natürlich auch denkbar, die Komponenten des Systems mittels Kabel zu verbinden.

Die Energieversorgung erfolgt idealerweise durch den Einsatz erneuerbarer Energien wie Photovoltaik-Anlagen 29 mit Speichermodul 30, da sich der entsprechende Wasserbedarf weitestgehend analog der Sonnenintensität entwickelt.

Der Einsatz dieses Ent- und Bewässerungssystems berücksichtigt die Anforderung der europäischen Wasserrahmen-Richtlinie in bisher nicht gekannter konsequenter Weise. Erstmalig ist es somit möglich, Niederschlagsmengen dezentral im Bereich des Auftreffens abzuleiten, zu speichern und gleichzeitig der sinnvollen Weiterverwendung wieder zuzuführen.

Ein weiterer Vorteil dieses Systems besteht darin, dass diese Art der Niederschlagswasserbewirtschaftung neben Hochleistungspflastersystemen auch mit dem Einsatz von Naturstein und Klinker bei entsprechender Verlegung sowie dem Einsatz von sogenanntem Drain-Asphalt funktionieren kann und somit sowohl verkehrstechnisch als vor allem auch gestalterisch hier nahezu keinerlei Anwendungsbeschränkungen bestehen.

Denkbar ist zusätzlich eine unterschiedliche Flächengestaltung in Kombination der einzelnen Bauweisen, sodass den unterschiedlichen Anwendungsbereichen hinsichtlich der Verkehrsbelastung, aber auch dem gestalterischen Aspekt Rechnung getragen werden kann.

Zusätzlich erlaubt dieses System den Anschluss von Entwässerungsrinnen 31 oder anderer Entwässerungselemente im Bereich der Verkehrsflächen zur (Not-) Entwässerung, ohne dass die damit abgeleiteten Niederschlagsmengen für die angedachte Verwendung nicht mehr zur Verfügung stehen. Auch diese Wassermengen werden dem unterirdischen Retentionsraum 11 zugeführt und stehen somit der weiteren Verwendung analog der dezentralen Sammlung zur Verfügung. Ein wesentlicher Vorteil liegt darin, dass neben den ökologischen Vorteilen auch auf den Einsatz von Regenwasserkanälen bzw. kombinierten Regen-Schmutzwasserkanälen verzichtet werden kann, was zu einer deutlichen Reduzierung der Investitionskosten führen kann.

Denkbar ist zudem eine unterirdische Vernetzung verschiedener Retentionsräume 11, um zum einen punktuell auftretende Starkregenereignisse besser verteilen und zum anderen punktuell höhere lokale Wasserbedarfe an der Oberfläche besser ausgleichen und bedienen zu können.

### Bezugszeichenliste:

- 10: Erdreichabdeckung
- 11: Retentionsraum
- 12: Niederschlagswasser
- 13: Deckschicht
- 14: Bettungsschicht
- 15: Speicherschicht
- 16: Sperrschicht
- 17: Tragschicht
- 18: Drainagesystem
- 19: Pumpe
- 20: Überlaufableitung
- 21: Absetzkammer
- 22: Vegetation
- 23: Grundwasserkörper
- 24: Leitung
- 25: Feuchtigkeit
- 26: Mehrwegeventil
- 27: Sensor
- 28: Direktzuführung
- 29: PV-Anlage
- 30: Speicher
- 31: Entwässerungsrinne
- 32: Leitungsnetz
- 33: Steuerung
- 34: Funksystem

## Patentansprüche

1. System zur Speicherung von insbesondere auf einer Erdreichabdeckung (10) anfallendem Niederschlagswasser (12) in einem Retentionsraum (11) zur späteren Wiederverwendung, wobei ein Bereich des Oberbaus der Erdreichabdeckung (10) dazu eingerichtet ist, eine wasserführende Ebene unterhalb einer Deckschicht (13) der Erdreichabdeckung (10) zu schaffen, um das anfallende Niederschlagswasser (12) dem Retentionsraum (11) zuzuleiten, und wobei das System dazu eingerichtet ist, das im Retentionsraum (11) gespeicherte Wasser bei Bedarf der wasserführenden Ebene zuzuführen, um es dort zu verdunsten.

2. System nach Anspruch 1, wobei die Erdreichabdeckung (10) dazu eingerichtet ist, das anfallende Niederschlagswasser (12) vorzugsweise vollständig in Richtung eines Unterbaus der Erdreichabdeckung (10) zu versickern.

3. System nach Anspruch 1 oder 2, wobei die Erdreichabdeckung (10) eine sickerfähige Deckschicht (13) aufweist, insbesondere aus (Beton-)Pflastersteinen, Klinker, Natursteinen oder Drain-Asphalt.

4. System nach Anspruch 1 oder einem der anderen vorhergehenden Ansprüche, wobei der Bereich des Oberbaus durch eine Speicherschicht (15) gebildet ist, die oberhalb einer im Wesentlichen flüssigkeitsdichten, insbesondere wasserdichten, Sperrschicht (16) als wasserführende Ebene angeordnet ist, wobei vorzugsweise vorgesehen ist, dass zwischen Speicherschicht (15) und Deckschicht (13) eine Bettungsschicht (14) angeordnet ist.

5. System nach Anspruch 1 oder einem der anderen vorhergehenden Ansprüche, wobei der Bereich des Oberbaus dazu eingerichtet ist, ein oder mehrere Drainagesysteme (18) aufzunehmen, um bei insbesondere größeren Niederschlagsmengen die Ableitung zum Retentionsraum (11) sicherzustellen.

6. System nach Anspruch 1 oder einem der anderen vorhergehenden Ansprüche, wobei das Niederschlagswasser (12) aus dem Bereich des Oberbaus und/oder dem oder den Drainagesystemen (18) über eine oder mehrere Leitungen dem Retentionsraum (11) zugeführt wird.

7. System nach Anspruch 1 oder einem der anderen vorhergehenden Ansprüche, wobei dem Retentionsraum (11) eine oder mehrere Pumpen (19) zugeordnet sind, um das anfallende Niederschlagswasser (12) aus dem oder den Drainagesystemen (18) abzusaugen oder dem Bereich des Oberbaus zuzuführen.

8. System nach Anspruch 1 oder einem der anderen vorhergehenden Ansprüche, wobei dem Retentionsraum (11) eine Absetzkammer (21) für das zugeführte Niederschlagswasser (12) zugeordnet ist, die dazu eingerichtet ist, dass sich Grobstoffe absetzen können.

9. System nach Anspruch 1 oder einem der anderen vorhergehenden Ansprüche, wobei dem Retentionsraum (11) ein steuerbares Überlaufsystem (20) zugeordnet ist, welches dazu eingerichtet ist, sowohl die passive als auch die aktive Ableitung des Niederschlagswassers (12) aus dem Retentionsraum (11) direkt in den Grundwasserkörper (23) zu ermöglichen.

10. System nach Anspruch 1 oder einem der anderen vorhergehenden Ansprüche, wobei der Retentionsraum (11) dazu eingerichtet ist, Wasser aus dem Grundwasserkörper (23) zu entnehmen.

11. System nach Anspruch 1 oder einem der anderen vorhergehenden Ansprüche, wobei eine Steuerung (33) vorgesehen ist, um (Niederschlags-)Wasser (12) nach Maßgabe des jeweiligen Bedarfs in den Bereich des Oberbaus der Erdreichabdeckung (10) zurückzuführen.

12. System nach Anspruch 1 oder einem der anderen vorhergehenden Ansprüche, wobei das System dazu eingerichtet ist, (Niederschlags-)Wasser (12) aus dem Retentionsraum (11) zu entnehmen und oberseitig der Erdreichabdeckung (10) zuzuführen, insbesondere mittels Flächenbewässerung.

13. System nach Anspruch 1 oder einem der anderen vorhergehenden Ansprüche, wobei die Energieversorgung des Systems bzw. deren Komponenten durch den Einsatz erneuerbarer Energien wie insbesondere Photovoltaik-Anlagen (29) mit oder ohne Speichermodul (30) erfolgt.

14. System nach Anspruch 1 oder einem der anderen vorhergehenden Ansprüche, wobei ein oder mehrere Retentionsräume (11) des Systems oder unterschiedliche Systeme miteinander vernetzt sind.
